# EUROPÄISCHE PATENTANMELDUNG

(11) **EP 3 106 579 A1**
(43) Veröffentlichungstag der Anmeldung: **21.12.2016**
(21) Anmeldenummer: 15172979.5
(22) Anmeldetag: 19.06.2015
(51) Int. Cl.: E04B 1/76, E04F 21/18, B65B 13/02, F16B 2/08

(54) **VERFAHREN ZUM BEFESTIGEN EINER ISOLIERUNG AN EINER WAND**

(71) Anmelder: HILTI Aktiengesellschaft, 9494 Schaan (LI)
(72) Erfinder: von Monkiewitsch, Matthias, 6900 Bregenz (AT); Gully, Stéphane, 6830 Rankweil (AT)
(74) Vertreter: Hilti Aktiengesellschaft Corporate Intellectual Property

(57) **Zusammenfassung**

Verfahren zum Befestigen eines schichtförmigen Bauteiles (4), insbesondere einer Isolierung (5), an einem Setzgegenstand (2), insbesondere an einer Wand (3) oder Decke eines Gebäudes, mit den Schritten: Befestigen eines Setzelementes (8) mit einem mit dem Setzelement (8) verbundenen Verbindungsteil (12) in dem Setzgegenstand (2), Auflegen einer ersten Seite (19) eines Abschlusselementes (16) auf eine Außenseite (6) des schichtförmigen Bauteiles (4) und das Abschlusselement (16) eine zweite, der ersten Seite (19) gegenüberliegende Seite (20) aufweist, Verbinden des Abschlusselementes (16) mit dem Verbindungsteil (12), indem ein Teil (21) des Verbindungsteiles (12) durch eine Öffnung in dem Abschlusselement (16) durchgeführt wird, Durchtrennen des durch die Öffnung hindurch geführten Teiles (21) des Verbindungsteiles (12), wobei mit einem Auszugtester (30) auf den durch die Öffnung hindurch geführten Teil (21) des Verbindungsteiles (12) eine Kraft aufgebracht wird, so dass das Verbindungsteil (12) zwischen dem in dem Setzgegenstand (2) befestigten Setzelement (8) und dem Abschlusselement (16) mit einer Prüfzugkraft beansprucht wird und ausschließlich ab dem Überschreiten der Prüfzugkraft größer als eine vorgegebene Sicherheits-Prüfzugkraft mit dem Auszugtester (30) das Durchtrennen des Verbindungsteiles (12) ausgeführt wird.

## Beschreibung

Die vorliegende Erfindung betrifft ein Verfahren zum Befestigen eines schichtförmigen Bauteiles an einem Setzgegenstand gemäß dem Oberbegriff des Anspruches 1 und ein System zum Befestigen eines schichtförmigen Bauteiles an einem Setzgegenstand gemäß dem Oberbegriff des Anspruches 10.

Im Bauwesen ist es erforderlich, an Wänden oder Decken von Gebäuden als einem Setzgegenstand eine Isolierung als ein schichtförmiges Bauteil zu befestigen. Die Isolierung dient hierbei im Allgemeinen als Wärmeisolierung für die Wand oder Decke des Gebäudes und wird außenseitig auf der Wand oder Decke befestigt. Hierzu werden Setzelemente mit Verbindungsteilen an der Wand oder Decke befestigt und am Ende des Verbindungsteils wird mit diesem ein Abschlusselement verbunden. Das Abschlusselement liegt dabei auf einer Außenseite der Isolierung auf und das Verbindungsteil ist innerhalb eines Durchgangslochs an der Isolierung angeordnet. Das Setzelement ist in der Wand oder Decke befestigt. Dadurch kann die Isolierung an der Wand oder der Decke befestigt werden.

Aus der DE 195 04 984 A1 ist eine Vorrichtung zum Befestigen von Isolationselementen mit einer an einem Bauteil festlegbaren Aufnahme offenbart. Die Vorrichtung umfasst einen sich an den Isolationselementen abstützenden großflächigen Kopf, wobei zwischen der Aufnahme und dem Kopf wenigstens ein biegeelastisches Halteband angeordnet ist. Der Kopf bildet somit das Abschlusselement, und das Verbindungsteil ist von zwei biegeelastischen Haltebändern gebildet. Nach dem Befestigen des Kopfes als dem Abschlusselement werden die den Kopf überragenden Enden der Haltebänder als Verbindungsteile abgeschnitten. Das Setzelement und das Verbindungsteil sind hierbei getrennte Bauteile. In nachteiliger Weise ist somit ein aufwendiges manuelles Abschneiden der Haltebänder erforderlich. Ferner erfolgt keine Prüfung der ordnungsgemäßen und ausreichenden Befestigung des Bolzens als dem Setzelement in dem Setzgegenstand als beispielsweise eine Wandung.

Die EP 2 320 005 A2 zeigt ein Verfahren zum Festlegen eines Befestigungselements für einen an einem mit einer Dämmschicht versehenen Wandelement anzuordnenden bzw. festzulegenden Gegenstand. Es wird ein Loch gebildet, welches die Dämmschicht durchdringt. Das Setzelement und das Verbindungsteil sind hier einteilig ausgebildet, das heißt, das Setzelement ist von Spreizkörpern gebildet und das Verbindungsteil weist ein stab- bzw. stangenartiges Verankerungselement auf mit einer Profilierung in Form einer Verzahnung als Formschlusselemente. Mit dieser Profilierung ist eine Verrastung an einem Abschlusselement möglich. Das Abschlusselement weist eine Öffnung zur Durchführung des stab- bzw. stangenartigen Verankerungselements auf. Nach dem Durchführen eines Teils des stab- bzw. stangenartigen Verankerungselements kann dieses mit einem einfachen Werkzeug, beispielsweise einer Zange, abgeschnitten werden. In nachteiliger Weise erfolgt somit keine Prüfung der Zugfestigkeit bzw. Belastbarkeit der befestigten Spreizkörper und das Abschneiden des stab- bzw. stangenartigen Verankerungselements, welches durch die Öffnung an dem Abschlusselement durchgeführt ist und damit nicht mehr benötigt wird, hat in aufwendiger Weise mit einem gesonderten Werkzeug zu erfolgen.

Die Aufgabe der vorliegenden Erfindung besteht deshalb darin, ein Verfahren und ein System zur Verfügung zu stellen, bei dem eine Isolierung als ein schichtförmiges Bauteil zuverlässig mit einem geringen Arbeitsaufwand an einer Wand oder Decke als Setzgegenstand befestigt werden kann.

Diese Aufgabe wird gelöst mit einem Verfahren zum Befestigen eines schichtförmigen Bauteiles, insbesondere einer Isolierung, an einem Setzgegenstand, insbesondere an einer Wand oder Decke eines Gebäudes, mit den Schritten: Befestigen eines Setzelementes mit einem mit dem Setzelement verbundenen Verbindungsteil in dem Setzgegenstand, Auflegen einer ersten Seite eines Abschlusselementes auf eine Außenseite des schichtförmigen Bauteiles, wobei das Abschlusselement eine zweite, der ersten Seite gegenüberliegende Seite aufweist, Verbinden des Abschlusselementes mit dem Verbindungsteil, indem ein Teil des Verbindungsteiles durch eine Öffnung in dem Abschlusselement durchgeführt wird, Durchtrennen des durch die Öffnung hindurch geführten Teiles des Verbindungsteiles, wobei mit einem Auszugtester auf den durch die Öffnung hindurch geführten Teil des Verbindungsteiles eine Kraft aufgebracht wird, so dass das Verbindungsteil zwischen dem in dem Setzgegenstand befestigten Setzelement und dem Abschlusselement mit einer Prüfzugkraft beansprucht und ausschließlich ab dem Überschreiten der Prüfzugkraft größer als eine vorgegebene Sicherheits-Prüfzugkraft mit dem Auszugtester das Durchtrennen des Verbindungsteiles ausgeführt wird.

In vorteilhafter Weise kann damit mit dem Auszugtester sowohl eine Sicherheits-Prüfzugkraft auf das Verbindungsteil und damit auch auf das Setzelement aufgebracht werden, um damit die ausreichende und ordnungsgemäße Befestigung des Setzelements in dem Setzgegenstand zu überprüfen, als auch mit dem Auszugtester auch das Durchtrennen des nicht benötigten Teils des Verbindungsteils, welches durch die Öffnung an dem Abschlusselement durchgeführt ist, ausgeführt werden. Das Durchtrennen des Verbindungsteils an einer zweiten Seite des Abschlusselements wird nur dann ausgeführt, wenn das Setzelement der Prüfzugkraft größer als die Sicherheits-Prüfzugkraft standgehalten hat. Dadurch können Isolierungen an Wänden oder Decken von Gebäuden besonders schnell und zuverlässig mit einem geringen Herstellungsaufwand befestigt werden.

In einer zusätzlichen Ausführungsform sind das Setzelement und das Verbindungseil zweiteilig und das Setzelement wird vor dem Befestigen in dem Setzgegenstand durch eine Haltebohrung an einer Kopplungskomponente des Verbindungsteiles geführt und an der Kopplungskomponente des Verbindungsteiles fixiert und/oder das Durchtrennen des durch die Öffnung hindurch geführten Teiles des Verbindungsteiles im Bereich der zweiten Seite des Abschlusselementes ausgeführt und/oder mit dem Auszugtester auf das Abschlusselement eine Kraft aufgebracht als Gegenkraft zu der von dem Auszugtester auf den durch die Öffnung hindurch geführten Teil des Verbindungsteiles aufgebrachten Kraft und/oder mittels an dem Verbindungsteil ausgebildeter Formschlusselemente und wenigstens eines an dem Abschlusselement ausgebildeten Gegenformschlusselementes das Verbindungsteil nur in Richtung von der ersten Seite zu der zweiten Seite des Abschlusselementes bewegt und in der entgegengesetzten Richtung die Bewegung des Verbindungsteils in der Öffnung blockiert wird.

In einer ergänzenden Variante sind das Setzelement und das Verbindungsteil einteilig ausgebildet.

In einer zusätzlichen Ausführungsform ist an dem Setzelement ein Haltekopf ausgebildet und der Haltekopf wird auf die Kopplungskomponente des Verbindungsteiles aufgelegt zur Fixierung des Setzelementes an dem Verbindungsteil und/oder das wenigstens eine Gegenformschlusselement im Bereich der Öffnung an dem Abschlusselement ausgebildet. Der Haltekopf dient als Anschlag, so dass dadurch die von der Kopplungskomponente auf das Setzelement aufzubringenden Kräfte, insbesondere Druckkräfte, auf den Haltekopf des Setzelements wirken und von diesem auf das Setzelement innerhalb des Setzgegenstandes übertragen werden.

In einer zusätzlichen Ausgestaltung wird mit einem an dem Auszugtester ausgebildeten Stellorgan, insbesondere einem Schieber oder Drehknopf, die Sicherheits-Prüfzugkraft verändert und/oder bei einem fehlerhaft oder schadhaft an dem Setzgegenstand befestigten Setzelement während des Aufbringens der Prüfzugkraft auf das Verbindungsteil mit einer Prüfzugkraft, die kleiner oder gleich ist der Sicherheits-Prüfzugkraft, das Setzelement wenigstens teilweise aus dem Setzgegenstand herausgezogen. Bei der Verwendung von unterschiedlichen Setzelementen oder von Setzelementen in Setzgegenständen aus einem unterschiedlichen Material, beispielsweise Stahlbeton oder Ziegelmauerwerk, ist es erforderlich, die Sicherheits-Prüfzugkraft entsprechend anzupassen. Mittels des Stellorgans kann damit in einfacher Weise die Sicherheits-Prüfzugkraft entsprechend an die erforderlichen Parameter angepasst werden. Bei einem fehlerhaft, schadhaft oder nur unzureichend befestigten Setzgegenstand wird dieser aufgrund des Aufbringens der Prüfzugkraft aus dem Setzgegenstand wenigstens teilweise herausgezogen, so dass dadurch der Anwender erkennt, dass das Setzelement nicht ausreichend befestigt ist und dieses zu entfernen hat, so dass anschließend in der Nähe des bisher gesetzten Setzelements ein neues Setzelement gesetzt werden kann.

Vorzugsweise wird während und/oder nach dem Aufbringen der Prüfzugkraft auf das Verbindungsteil von der ersten Seite des Abschlusselementes auf eine Außenseite des schichtförmigen Bauteiles eine Prüfdruckkraft aufgebracht und auf das Setzelement wird die Prüfzugkraft in Richtung zu dem Abschlusselement aufgebracht und/oder die erforderliche Kraft für das Aufbringen der Prüfzugkraft auf das Verbindungsteil und für das anschließende Durchtrennen des Verbindungsteiles wird ausschließlich manuell auf nur ein Betätigungsorgan an dem Auszugtester aufgebracht oder ausschließlich von nur einem Aktuator in dem Auszugtester zur Verfügung gestellt.

In einer ergänzenden Variante wird zuerst das schichtförmige Bauteil auf den Setzgegenstand aufgelegt und anschließend wird das Setzelement in dem Setzgegenstand befestigt und vorzugsweise wird vor der Befestigung des Setzelementes das Setzelement mit dem Verbindungsteil durch ein Durchgangsloch in dem schichtförmigen Bauteil durchgeführt. Das Durchgangsloch wird im Allgemeinen mittels eines Bohrers hergestellt vor dem Setzen des Setzelements.

In einer zusätzlichen Ausgestaltung ist das Setzelement eine Schraube und die Schraube wird mit einem Schrauber, insbesondere Akkuschrauber, in dem Setzgegenstand mittels Einschrauben befestigt.

In einer ergänzenden Variante wird in den Setzgegenstand eine Bohrung eingebohrt und anschließend die Schraube mit einem Dübel in der Bohrung befestigt.

In einer zusätzlichen Ausgestaltung ist das Setzelement ein Bolzen oder ein Nagel und der Bolzen oder Nagel wird mit einem Setzgerät in dem Setzgegenstand befestigt und/oder das Verfahren wird mit einem in dieser Schutzrechtsanmeldung beschriebenen System ausgeführt.

Die Aufgabe wird ebenfalls gelöst mit einem System zum Befestigen eines schichtförmigen Bauteiles, insbesondere einer Isolierung, an einem Setzgegenstand, insbesondere an einer Wand oder Decke eines Gebäudes, umfassend ein Setzelement, ein Verbindungsteil, an welchem Formschlusselemente ausgebildet sind, ein Abschlusselement mit einer ersten Seite zum Auflegen des Abschlusselementes auf eine Außenseite des schichtförmigen Bauteiles, wobei das Abschlusselement eine zweite, der ersten Seite gegenüberliegende Seite aufweist, wobei an dem Abschlusselement eine Öffnung ausgebildet ist zum Durchführen des Verbindungsteiles durch die Öffnung, und wobei an dem Abschlusselement wenigstens ein Gegenformschlusselement ausgebildet ist, so dass das Verbindungsteil nur in Richtung von der ersten Seite zu der zweiten Seite des Abschlusselementes bewegbar ist und in der entgegengesetzten Richtung die Bewegung des Verbindungsteils in der Öffnung blockiert ist aufgrund einer formschlüssigen Verbindung zwischen dem wenigstens einen Gegenformschlusselement und wenigstens einem Formschlusselement an dem Verbindungsteil, wobei das System einen Auszugtester umfasst und an dem Auszugtester ein Prüfmechanismus ausgebildet ist, so dass auf den durch die Öffnung hindurch geführten Teil des Verbindungsteiles eine Prüfzugkraft aufbringbar ist und das Verbindungsteil zwischen dem Setzelement und dem Abschlusselement mit der Prüfzugkraft beanspruchbar ist und der Prüfmechanismus in Wirkverbindung mit einer Scheideeinrichtung steht, so dass ausschließlich ab dem Überschreiten einer Prüfzugkraft größer als eine vorgegebene Sicherheits-Prüfzugkraft, die auf das Verbindungsteil aufbringbar ist, mit dem Auszugtester das Durchtrennen des Verbindungsteiles ausführbar ist.

In einer zusätzlichen Ausgestaltung umfasst der Auszugtester ein, vorzugsweise nur ein, Betätigungsorgan, insbesondere einen Betätigungshebel oder einen Betätigungsschieber, zum Aufbringen der Prüfzugkraft auf das Verbindungsteil und zum Aufbringen der Kraft zum Durchtrennen des Verbindungsteiles. In einer weiteren Ausgestaltung ist mit dem System ein in dieser Schutzrechtsanmeldung beschriebenes Verfahren ausführbar ist und/oder das wenigstens eine Gegenformschlusselement im Bereich der Öffnung an dem Abschlusselement ausgebildet und/oder die Prüfzugkraft auf das Abschlusselement aufbringbar aufgrund eines Aufliegens des Auszugtesters auf dem Abschlusselement. Mit dem Betätigungsorgan wird auf den Auszugtester manuell von Hand sowohl die Kraft zum Aufbringen der Prüfkraft aufgebracht, als auch die Kraft zum Abschneiden oder Ablängen des Verbindungsteils. Die Handhabung des Auszugtesters ist somit in der Praxis besonders einfach und zuverlässig.

In einer ergänzenden Ausgestaltung umfasst der Auszugtester eine Einführöffnung zum Einführen des Verbindungsteiles in den Auszugtester und vorzugsweise eine Ausführöffnung zum Ausführen des Verbindungsteiles aus dem Auszugtester und/oder der Auszugtester umfasst wenigstens einen beweglichen Greifarm zum Greifen des Verbindungsteiles innerhalb des Auszugtesters und zum Aufbringen einer Kraft als Prüfzugkraft auf das mit dem wenigstens einen Greifarm gegriffene Verbindungsteil.

Zweckmäßig ist das Verbindungsteil im Wesentlichen als ein, vorzugsweise biegbares, Band ausgebildet, insbesondere ist an dem Verbindungsteil nur ein Band ausgebildet und/oder das Durchtrennen des Verbindungsteiles mit dem Auszugtester automatisch ausführbar mittels einer auf das Betätigungsorgan manuell aufgebrachten Kraft nach dem Überschreiten der Sicherheits-Prüfzugkraft. In einer zusätzlichen Ausführungsform sind das Verbindungsteil und das Setzelement getrennte Bauteile, insbesondere ist das Setzelement eine Schraube oder ein Bolzen und vorzugsweise ist das Verbindungsteil aus Kunststoff und das Setzelement aus Metall ausgebildet.

In einer ergänzenden Variante ist das Abschlusselement als ein tellerförmiges Auflageteil ausgebildet und vorzugsweise ist das Abschlusselement aus Kunststoff ausgebildet und/oder an dem Verbindungsteil eine Haltebohrung ausgebildet zur Anordnung des Setzelementes innerhalb der Haltebohrung, wobei das Verbindungsteil und Setzelement getrennte Bauteile sind. In einer weiteren Ausgestaltung sind die Formschlusselemente als Zähne oder Rillen und/oder das wenigstens eine Gegenformschlusselement als eine bewegliche Rastnase ausgebildet und/oder das System umfasst eine große Anzahl an Setzelementen, Verbindungsteilen und Abschlusselementen, insbesondere mehr als 20, 40 oder 60 Setzelemente, Verbindungsteile und Abschlusselemente.

Im Nachfolgenden werden Ausführungsbeispiele der Erfindung unter Bezugnahme auf die beigefügten Zeichnungen näher beschrieben. Es zeigen:
- Fig. 1: eine Seitenansicht eines Verbindungsteiles,
- Fig. 2: eine perspektivische Ansicht des Verbindungsteiles gemäß Fig. 1,
- Fig. 3: eine Seitenansicht eines Abschlusselementes,
- Fig. 4: eine perspektivische Ansicht des Abschlusselementes gemäß Fig. 3,
- Fig. 5: einen Schnitt durch eine Wand und eine Isolierung vor dem Befestigen einer Schraube als Setzelement und eines Verbindungsteiles an der Wand mit einem Akkuschrauber,
- Fig. 6: einen Schnitt durch die Wand und die Isolierung vor dem Befestigen eines Bolzens als Setzelement und des Verbindungsteiles an der Wand mit einem Setzgerät und
- Fig. 7: einen Schnitt durch die Wand und die Isolierung gemäß Fig. 6 nach dem Befestigen des Bolzens als Setzelement und des Verbindungsteiles an der Wand mit dem Setzgerät und während des Aufbringens einer Prüfzugkraft auf das Setzelement und das Verbindungsteil mit einem Auszugtester.

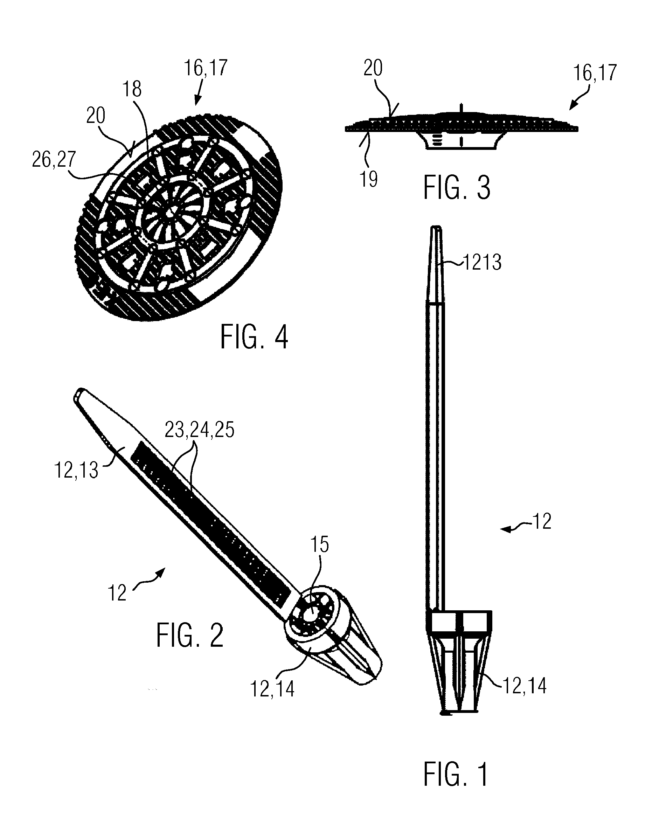

Ein System 1 zum Befestigen eines schichtförmigen Bauteils 4, nämlich einer Isolierung 5 an einer Wand 3 eines Gebäudes als einem Setzgegenstand 2, umfasst ein Setzelement 8, ein Verbindungsteil 12, ein Abschlusselement 16 und einen Auszugtester 30. Das Setzelement 8 und das Verbindungsteil 12 sind als getrennte Bauteile ausgebildet. Das Setzelement 8 ist von einer Schraube 10 oder einem Bolzen 11 bzw. Nagel 11 gebildet und am Ende der Schraube 10 bzw. des Bolzens 11 ist ein Haltekopf 9 ausgebildet. Das Setzelement 8 ist aus Metall ausgebildet. Das Verbindungsteil 12 aus Kunststoff umfasst ein Band 13 als ein biegbares Band 13 und eine Kopplungskomponente 14 ebenfalls aus Kunststoff. An der Kopplungskomponente 14 ist eine Haltebohrung 15 ausgebildet, deren Durchmesser kleiner ist als der Durchmesser des Haltekopfes 9, so dass dadurch ein Schaft des Setzelements 8 durch die Haltebohrung 15 durchgeführt werden kann, bis der Haltekopf 9 auf der Kopplungskomponente 14 aufliegt. Das Abschlusselement 16 ist als ein tellerförmiges oder scheibenförmiges Auflageteil 17 aus Kunststoff ausgebildet (Fig. 3 und 4) mit einer Öffnung 18 zur Durchführung des Bandes 13 des Verbindungsteils 12. Das Abschlusselement 16 weist eine erste Seite 19 zum Auflegen auf eine Außenseite 6 des schichtförmigen Bauteils 4 sowie eine zweite Seite 20 auf. Die zweite Seite 20 ist gegenüberliegend zu der ersten Seite 19 ausgebildet. An dem Band 13 sind eine Vielzahl von Zähnen 24 bzw. Rillen 25 als Formschlusselemente 23 ausgebildet und an dem Abschlusselement 16 ist eine bewegbare Rastnase 27 als ein Gegenformschlusselement 26 vorhanden. Das Verbindungsteil 12 weist ein erstes oberes Ende auf gemäß der Darstellung in Fig. 1 und 2 und dieses erste obere Ende kann durch die Öffnung 18 an dem Abschlusselement 16 durchgeführt werden. Das zweite Ende des Verbindungsteils 12 ist von der Kopplungskomponente 14 gebildet. Aufgrund der Formschlusselemente 23 an dem Band 13 und des Gegenformschlusselements 26 im Bereich der Öffnung 18 des Abschlusselements 16 kann das Band nur in einer Richtung von der ersten Seite 19 zu der zweiten Seite 20 des Abschlusselements 16 durch die Öffnung 18 durchgeführt werden. Das erste Ende des Verbindungsteils 12 wird dabei zuerst durch die Öffnung 18 an der ersten Seite 19 eingeschoben, so dass dadurch das Band 13 an der zweiten Seite 20 aus dem Abschlusselement 16 herausragt. Zum Befestigen der Isolierung 5 an der Wand 3 des nicht dargestellten Gebäudes wird die Isolierung 5 zunächst auf die Wand 3 aufgelegt und anschließend wird mit einem nicht dargestellten Bohrer ein Durchgangsloch 7 in die Isolierung 5 eingearbeitet.

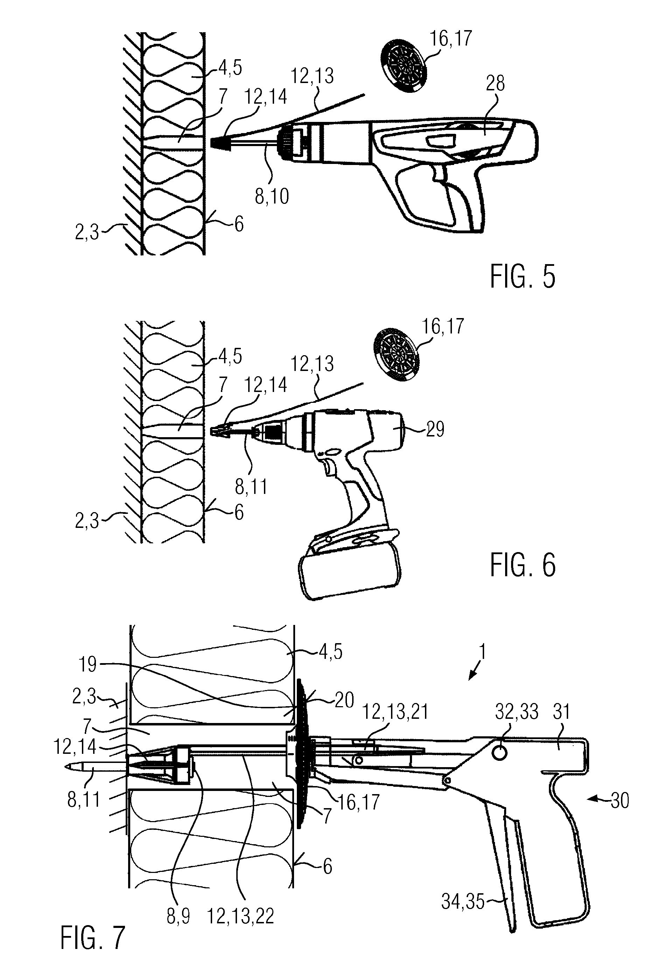

In dem in Fig. 5 dargestellten Ausführungsbeispiel wird das Verbindungsteil 12 mit dem an der Kopplungskomponente 14 befestigten Setzelement 8 als der Schraube 10 durch das Durchgangsloch 7 durchgeführt, bis die Schraube 10 auf der Wand 3 aufliegt. Anschließend wird mit einem Akkuschrauber 28 (Fig. 5) die Schraube 10 in die Wand 3 eingeschraubt (nicht dargestellt) und dadurch die Schraube 10 an der Wand 3 befestigt. Aufgrund des Aufliegens des Haltekopfes 9 der Schraube 10 auf der Kopplungskomponente 14 sind die Kopplungskomponente 14 und damit auch das Verbindungsteil 12 an der Wand 3 befestigt. Anschließend wird das Band 13, welches aus dem Durchgangsloch 7 herausragt, durch das Abschlusselement 16 geschoben, indem das erste Ende des Bandes 13 durch die Öffnung 18 an der ersten Seite 19 des Abschlusselements 16 eingeführt wird, bis die erste Seite 19 des Abschlusselements 16 auf der Außenseite 6 der Isolierung 5 aufliegt (Fig. 7).

Der Auszugtester 30 weist ein Gehäuse 31 auf sowie ein Stellorgan 32 als ein Drehknopf 33. Ferner umfasst der Auszugtester 30 einen Betätigungshebel 35 als Betätigungsorgan 34. An dem Auszugtester 30 ist ferner eine Einführöffnung zum Einführen des ersten Endes des Bandes 13 in den Auszugtester 30 und eine Ausführöffnung zum Ausführen des Bandes 13 aus dem Auszugtester 30 (nicht dargestellt) ausgebildet. Der aus der Öffnung 18 herausragende Teil 21 des Bandes 13 als dem Verbindungsteil 12 wird in die Einführöffnung des Auszugtesters 30 eingeführt und anschließend manuell von Hand auf den Betätigungshebel 35 eine Kraft aufgebracht. Im Auszugtester 30 sind wenigstens zwei nicht dargestellte bewegliche Greifarme vorhanden, welche den Teil 21 des Bandes 13 innerhalb des Auszugtesters 30 greifen und aufgrund der auf den Betätigungshebel 35 aufgebrachten Kraft eine Zugkraft auf das Band 13 aufbringen, so dass das vordere Ende des Auszugtesters 30 im Bereich der Einführöffnung auf die zweite Seite 20 des Abschlusselements 16 eine Druckkraft aufbringt. Dadurch wird ein anderer Teil 22 des Verbindungsteils 12 als dem Band 13 innerhalb des Durchgangslochs 7 mit einer Prüfzugkraft beansprucht und diese Prüfzugkraft wird von dem Haltekopf 9, welcher auf der Kopplungskomponente 14 aufliegt, auf das Setzelement 8 innerhalb der Wand 3 übertragen. Dadurch wird auch die Schraube 10 mit der Prüfzugkraft beaufschlagt und geprüft. Durch das weitere Betätigen des Betätigungshebels 35 wird die Prüfzugkraft erhöht, bis zu einer Sicherheits-Prüfzugkraft. Nach dem Überschreiten der Sicherheits-Prüfzugkraft, so dass die Prüfzugkraft größer ist als die Sicherheits-Prüfzugkraft, wird selbsttätig durch das weitere Betätigen des Betätigungshebels 35 ein nicht dargestellter Schneidmechanismus innerhalb des Auszugtesters 30 aktiviert, so dass der Teil 21 des Verbindungsteils 12 als dem Band 13 innerhalb des Auszugtesters 30 in der Nähe der Einführöffnung automatisch und selbsttätig abgeschnitten wird.

In Fig. 6 ist ein zweites Ausführungsbeispiel des Systems 1 dargestellt. Das Setzelement 8 ist von dem Bolzen 11 bzw. dem Nagel 11 gebildet und der Bolzen 11 wird mit einem Setzgerät 29 in der Wand 3 als dem Setzgegenstand 2 befestigt. Setzgeräte 29 (Fig. 6) dienen dazu, Setzelemente 8 als Bolzen 11 oder Nägel 11 in einen Setzgegenstand 2 bzw. Untergrund 2, z. B. eine Wand 3 aus Stahlbeton oder Ziegel, einzutreiben und damit zu befestigen. Das Setzgerät 29 weist hierzu ein Gehäuse aus Metall und/oder Kunststoff auf. Dabei ist innerhalb eines von dem Gehäuse umschlossenen Gerätekörpers ein Setzmechanismus, welcher elektrisch, pyrotechnisch, pneumatisch oder durch die Verbrennung von Gas in einer Brennkammer betrieben ist, angeordnet. Von einem anderen Teil des Gehäuses ist ein Magazin für Setzelemente 8 umschlossen. Das Magazin umfasst eine große Anzahl von Setzelementen 8. Das in Fig. 5 dargestellte erste Ausführungsbeispiel unterscheidet sich somit von dem in Fig. 6 dargestellten zweiten Ausführungsbeispiel insbesondere dadurch, dass anstelle des Akkuschraubers 28 das Setzgerät 29 verwendet wird und anstelle der Schraube 10 der Bolzen 11.

Insgesamt betrachtet sind mit dem erfindungsgemäßen Verfahren zum Befestigen der Isolierung 5 an der Wand 3 sowie dem erfindungsgemäßen System 1 wesentliche Vorteile verbunden. Der Anwender des Verfahrens kann mit dem Auszugtester 30 sowohl die ordnungsgemäße Befestigung des Setzelements 8 in der Wand 3 prüfen und außerdem kann mit dem identischen Auszugtester 30 auch der Teil 21 des Bandes 13 jenseits der zweiten Seite 20 des Abschlusselements 16 einfach abgeschnitten werden. Zur Prüfung der ausreichenden Belastbarkeit des befestigten Setzelements 8 und zum Abschneiden des Bandes 13 ist somit nur noch ein Werkzeug erforderlich, nämlich der Auszugtester 30. Sofern die auf das Setzelement 8 wirkende Prüfzugkraft ein Herausbewegen des Setzelements 8 aus der Wand 3 bewirkt, kann der Anwender erkennen, dass das Setzelement 8 nicht ausreichend an der Wand 3 befestigt ist, und ein neues Setzelement 8 mit Verbindungsteil 12 an der Wand 3 im Bereich der vorhergehenden Befestigungsstelle befestigen. Die Sicherheits-Prüfzugkraft ist abgestimmt auf das verwendete Setzelement 8 und die Art des Setzgegenstandes 2, beispielsweise der Wand 3. Vorzugsweise hängt diese ab von der Art des Materials der Wand 3, beispielsweise Stahlbeton oder Ziegel, und der Art des Setzelements 8 sowie dessen Größe und konstruktive Ausbildung. Die Sicherheits-Prüfzugkraft liegt beispielsweise im Bereich zwischen 10 N und 500 N. Beispielsweise beträgt diese 30 N oder 80 N.

## Patentansprüche

1. Verfahren zum Befestigen eines schichtförmigen Bauteiles (4), insbesondere einer Isolierung (5), an einem Setzgegenstand (2), insbesondere an einer Wand (3) oder Decke eines Gebäudes, mit den Schritten:
- Befestigen eines Setzelementes (8) mit einem mit dem Setzelement (8) verbundenen Verbindungsteil (12) in dem Setzgegenstand (2),
- Auflegen einer ersten Seite (19) eines Abschlusselementes (16) auf eine Außenseite (6) des schichtförmigen Bauteiles (4), wobei das Abschlusselement (16) eine zweite, der ersten Seite (19) gegenüberliegende Seite (20) aufweist,
- Verbinden des Abschlusselementes (16) mit dem Verbindungsteil (12), indem ein Teil (21) des Verbindungsteiles (12) durch eine Öffnung (18) in dem Abschlusselement (16) durchgeführt wird,
- Durchtrennen des durch die Öffnung (18) hindurch geführten Teiles (21) des Verbindungsteiles (12),
**dadurch gekennzeichnet, dass**
mit einem Auszugtester (30) auf den durch die Öffnung (18) hindurch geführten Teil (21) des Verbindungsteiles (12) eine Kraft aufgebracht wird, so dass das Verbindungsteil (12) zwischen dem in dem Setzgegenstand (2) befestigten Setzelement (8) und dem Abschlusselement (16) mit einer Prüfzugkraft beansprucht wird und ausschließlich ab dem Überschreiten der Prüfzugkraft größer als eine vorgegebene Sicherheits-Prüfzugkraft mit dem Auszugtester (30) das Durchtrennen des Verbindungsteiles (12) ausgeführt wird.

2. Verfahren nach Anspruch 1,
**dadurch gekennzeichnet, dass**
das Setzelement (8) und das Verbindungseil (12) zweiteilig sind und das Setzelement (8) vor dem Befestigen in dem Setzgegenstand (2) durch eine Haltebohrung (15) an einer Kopplungskomponente (14) des Verbindungsteiles (12) geführt wird und an der Kopplungskomponente (14) des Verbindungsteiles (12) fixiert wird und/oder
das Durchtrennen des durch die Öffnung (18) hindurch geführten Teiles (21) des Verbindungsteiles (12) im Bereich der zweiten Seite (20) des Abschlusselementes (16) ausgeführt wird und/oder
mit dem Auszugtester (30) auf das Abschlusselement (16) eine Kraft aufgebracht wird als Gegenkraft zu der von dem Auszugtester (30) auf den durch die Öffnung (18) hindurch geführten Teil (21) des Verbindungsteiles (12) aufgebrachten Kraft
und/oder
mittels an dem Verbindungsteil (12) ausgebildeter Formschlusselemente (23) und wenigstens eines an dem Abschlusselement (16) ausgebildeten Gegenformschlusselementes (26) das Verbindungsteil (12) nur in Richtung von der ersten Seite (19) zu der zweiten Seite (20) des Abschlusselementes (16) bewegbar ist und in der entgegengesetzten Richtung die Bewegung des Verbindungsteils (12) in der Öffnung (18) blockiert wird.

3. Verfahren nach Anspruch 2,
**dadurch gekennzeichnet, dass**
an dem Setzelement (8) ein Haltekopf (9) ausgebildet ist und der Haltekopf (9) auf die Kopplungskomponente (14) des Verbindungsteiles (12) aufgelegt wird zur Fixierung des Setzelementes (8) an dem Verbindungsteil (12) und/oder
das wenigstens eine Gegenformschlusselement (26) im Bereich der Öffnung (18) an dem Abschlusselement (16) ausgebildet ist.

4. Verfahren nach einem oder mehreren der vorhergehenden Ansprüche,
**dadurch gekennzeichnet, dass**
mit einem an dem Auszugtester (30) ausgebildeten Stellorgan (32), insbesondere einem Schieber oder Drehknopf (33), die Sicherheits-Prüfzugkraft verändert wird
und/oder
bei einem fehlerhaft oder schadhaft an dem Setzgegenstand (2) befestigten Setzelement (8) während des Aufbringens der Prüfzugkraft auf das Verbindungsteil (12) mit einer Prüfzugkraft, die kleiner ist als die Sicherheits-Prüfzugkraft, das Setzelement (8) wenigstens teilweise aus dem Setzgegenstand (2) herausgezogen wird.

5. Verfahren nach einem oder mehreren der vorhergehenden Ansprüche,
**dadurch gekennzeichnet, dass**
während und/oder nach dem Aufbringen der Prüfzugkraft auf das Verbindungsteil (12) von der ersten Seite (19) des Abschlusselementes (16) auf eine Außenseite (6) des schichtförmigen Bauteiles (4) eine Prüfdruckkraft aufgebracht wird und auf das Setzelement (8) die Prüfzugkraft in Richtung zu dem Abschlusselement (16) aufgebracht wird
und/oder
die erforderliche Kraft für das Aufbringen der Prüfzugkraft auf das Verbindungsteil (12) und für das anschließende Durchtrennen des Verbindungsteiles (12) ausschließlich manuell auf nur ein Betätigungsorgan (34) an dem Auszugtester (30) aufgebracht wird oder ausschließlich von nur einem Aktuator in dem Auszugtester (30) zur Verfügung gestellt wird.

6. Verfahren nach einem oder mehreren der vorhergehenden Ansprüche,
**dadurch gekennzeichnet, dass**
zuerst das schichtförmige Bauteil (4) auf den Setzgegenstand (2) aufgelegt wird und anschließend das Setzelement (8) in dem Setzgegenstand (2) befestigt wird und vorzugsweise vor der Befestigung des Setzelementes (8) das Setzelement (8) mit dem Verbindungsteil (12) durch ein Durchgangsloch (7) in dem schichtförmigen Bauteil (4) durchgeführt wird.

7. Verfahren nach einem oder mehreren der vorhergehenden Ansprüche,
**dadurch gekennzeichnet, dass**
das Setzelement (8) eine Schraube (10) ist und die Schraube (10) mit einem Schrauber, insbesondere Akkuschrauber (28), in dem Setzgegenstand (2) mittels Einschrauben befestigt wird.

8. Verfahren nach Anspruch 7,
**dadurch gekennzeichnet, dass**
in den Setzgegenstand (2) eine Bohrung eingebohrt und anschließend die Schraube (10) mit einem Dübel in der Bohrung befestigt wird.

9. Verfahren nach einem oder mehreren der vorhergehenden Ansprüche,
**dadurch gekennzeichnet, dass**
das Setzelement (8) ein Bolzen (11) oder ein Nagel (11) ist und der Bolzen (11) oder Nagel (11) mit einem Setzgerät (29) in dem Setzgegenstand (2) befestigt wird
und/oder
das Verfahren mit einem System (1) gemäß einem oder mehrerer der Ansprüche 10 bis 15 ausgeführt wird.

10. System (1) zum Befestigen eines schichtförmigen Bauteiles (4), insbesondere einer Isolierung (5), an einem Setzgegenstand (2), insbesondere an einer Wand (3) oder Decke eines Gebäudes, umfassend
- ein Setzelement (8),
- ein Verbindungsteil (12), an dem Formschlusselemente (23) ausgebildet sind,
- ein Abschlusselement (16) mit einer ersten Seite (19) zum Auflegen des Abschlusselementes (16) auf eine Außenseite (6) des schichtförmigen Bauteiles (4), wobei das Abschlusselement (16) eine zweite, der ersten Seite (19) gegenüberliegende Seite (20) aufweist, wobei
- an dem Abschlusselement (16) eine Öffnung (18) ausgebildet ist zum Durchführen des Verbindungsteiles (12) durch die Öffnung (18), und an dem Abschlusselement (16) wenigstens ein Gegenformschlusselement (26) ausgebildet ist, so dass das Verbindungsteil (12) nur in Richtung von der ersten Seite (19) zu der zweiten Seite (20) des Abschlusselementes (16) bewegbar ist und in der entgegengesetzten Richtung die Bewegung des Verbindungsteils (12) in der Öffnung (18) blockiert ist aufgrund einer formschlüssigen Verbindung zwischen dem wenigstens einen Gegenformschlusselement (26) und wenigstens einem Formschlusselement (23) an dem Verbindungsteil (12),
**dadurch gekennzeichnet, dass**
das System (1) einen Auszugtester (30) umfasst und an dem Auszugtester (30) ein Prüfmechanismus ausgebildet ist, so dass auf den durch die Öffnung (18) hindurch geführten Teil (21) des Verbindungsteiles (12) eine Prüfzugkraft aufbringbar ist und das Verbindungsteil (12) zwischen dem Setzelement (8) und dem Abschlusselement (16) mit der Prüfzugkraft beanspruchbar ist und der Prüfmechanismus in Wirkverbindung mit einer Scheideeinrichtung steht, so dass ausschließlich ab dem Überschreiten der Prüfzugkraft größer als eine vorgegebene Sicherheits-Prüfzugkraft, die auf das Verbindungsteil (12) aufbringbar ist, mit dem Auszugtester (30) das Durchtrennen des Verbindungsteiles (12) ausführbar ist.

11. System nach Anspruch 10,
**dadurch gekennzeichnet, dass**
der Auszugtester (30) ein, vorzugsweise nur ein, Betätigungsorgan (34), insbesondere einen Betätigungshebel (35) oder einen Betätigungsschieber, zum Aufbringen der Prüfzugkraft auf das Verbindungsteil (12) und zum Aufbringen der Kraft zum Durchtrennen des Verbindungsteiles (12) umfasst
und/oder
mit dem System (1) ein Verfahren gemäß einem oder mehrerer der Ansprüche 1 bis 9 ausführbar ist
und/oder
das wenigstens eine Gegenformschlusselement (26) im Bereich der Öffnung (18) an dem Abschlusselement (16) ausgebildet ist
und/oder
die Prüfzugkraft auf das Abschlusselement (16) aufbringbar ist
aufgrund eines Aufliegens des Auszugtesters (30) auf dem Abschlusselement (16).

12. System nach Anspruch 10 oder 11,
**dadurch gekennzeichnet, dass**
der Auszugtester (30) eine Einführöffnung zum Einführen des Verbindungsteiles (12) in den Auszugtester (30) und vorzugsweise eine Ausführöffnung zum Ausführen des Verbindungsteiles (12) aus dem Auszugtester (30) umfasst
und/oder
der Auszugtester (30) wenigstens einen beweglichen Greifarm umfasst zum Greifen des Verbindungsteiles (12) innerhalb des Auszugtesters (30) und Aufbringen einer Kraft als Prüfzugkraft auf das mit dem wenigstens einen Greifarm gegriffene Verbindungsteil (12).

13. System nach einem oder mehreren der Ansprüche 10 bis 12,
**dadurch gekennzeichnet, dass**
das Verbindungsteil (12) im Wesentlichen als ein, vorzugsweise biegbares, Band (13) ausgebildet ist, insbesondere an dem Verbindungsteil (12) nur ein Band ausgebildet ist
und/oder
das Durchtrennen des Verbindungsteiles (12) mit dem Auszugtester (30) automatisch ausführbar ist mittels einer auf das Betätigungsorgan (34) manuell aufgebrachten Kraft nach dem Überschreiten der Sicherheits-Prüfzugkraft.

14. System nach einem oder mehreren der Ansprüche 10 bis 13,
**dadurch gekennzeichnet, dass**
das Verbindungsteil (12) und das Setzelement (8) getrennte Bauteile sind, insbesondere das Setzelement (8) eine Schraube (10) oder ein Bolzen (11) ist und vorzugsweise das Verbindungsteil (12) aus Kunststoff ausgebildet ist und das Setzelement (8) aus Metall ausgebildet ist.

15. System nach einem oder mehreren der Ansprüche 10 bis 14,
**dadurch gekennzeichnet, dass**
das Abschlusselement (16) als ein tellerförmiges Auflageteil (17) ausgebildet ist und vorzugsweise das Abschlusselement (16) aus Kunststoff ausgebildet ist
und/oder
an dem Verbindungsteil (12) eine Haltebohrung (15) ausgebildet ist zur Anordnung des Setzelementes (8) innerhalb der Haltebohrung (15) und das Verbindungsteil (12) und die Setzelement (8) getrennte Bauteile sind
und/oder
die Formschlusselemente (23) als Zähne (24) oder Rillen (25) ausgebildet sind
und/oder
das wenigstens eine Gegenformschlusselement (26) als eine bewegliche Rastnase (27) ausgebildet ist
und/oder
das System (1) eine große Anzahl an Setzelementen (8), Verbindungsteilen (12) und Abschlusselementen (16) umfasst, insbesondere mehr als 20, 40 oder 60 Setzelemente (8), Verbindungsteile (12) und Abschlusselemente (16).
